# FASCICULE DE BREVET EUROPEEN

(11) **EP 4 396 470 B1**
(45) Date de publication et mention de la délivrance du brevet: **11.11.2026**
(21) Numéro de dépôt: 22769328.0
(22) Date de dépôt: 22.08.2022
(51) Int. Cl.: F16D 65/00, F16D 65/092

(54) **ELEMENT DE COUVERTURE POUR UN FREIN A DISQUE A ETRIER FLOTTANT, FIXE A UNE CHAPE DU FREIN**
ABDECKELEMENT FÜR SCHWIMMSATTEL-SCHEIBENBREMSE, BEFESTIGT AN EINEM BREMSTRÄGER
COVER ELEMENT FOR A FLOATING CALIPER DISC BRAKE, FIXED TO A BRAKE YOKE

(30) Priorité: 30.08.2021 FR 2109034
(43) Date de publication de la demande: 10.07.2024
(73) Titulaire: Hitachi Astemo France, 93700 Drancy (FR)
(72) Inventeur: CHAIGNEAU, Fabien, 49190 ROCHEFORT-SUR-LOIRE (FR); CHAMPION, Pascal, 49240 AVRILLE (FR)
(74) Mandataire: Santarelli
(86) Numéro de dépôt international: PCT/FR2022/051599
(87) Numéro de publication internationale: WO 2023/031539

(56) Documents cités:
- WO-A1-03/095860
- WO-A1-2020/128228
- DE-C2- 4 101 514

## Description

### DOMAINE TECHNIQUE

L'invention se rapporte au domaine technique général des freins pour véhicules, notamment pour véhicules motorisés. Plus précisément, l'invention concerne la fixation d'un élément de couverture dans un frein à disque à étrier flottant.

### ÉTAT DE LA TECHNIQUE ANTÉRIEURE

Des freins à disque à étrier flottant de structure connue comportent une plaque de couverture qui est fixée aux doigts d'un nez d'étrier pour couvrir le nez d'étrier et pour cacher au moins partiellement l'intérieur du frein.

Les dimensions de la plaque de couverture sont souvent limitées et elle ne cache pas la chape du frein à disque à étrier flottant.

Par ailleurs, si la plaque de couverture présente des dimensions importantes, elle est relativement difficile à fixer à l'étrier et elle est davantage susceptible de se détacher.

Il existe ainsi un besoin pour améliorer la fixation d'un élément de couverture de grande dimension dans un frein à disque à étrier flottant.

Les documents WO 03/095860, WO2020/128228 et DE 41 015 14 C2 peuvent être mentionnés comme art antérieur.

### EXPOSÉ DE L'INVENTION

A cet égard, l'invention a pour objet un élément de couverture configuré pour couvrir un nez d'étrier d'un frein à disque à étrier flottant en cachant au moins partiellement l'étrier et une chape du frein à disque à étrier flottant. L'élément de couverture comprend un moyen de fixation qui est configuré pour fixer l'élément de couverture à la chape de frein à disque à étrier flottant.

Grâce à la fixation d'un élément de couverture selon l'invention à la chape du frein à disque à étrier flottant, un élément de couverture de grandes dimensions tend à être fixé plus solidement au frein et la fixation de l'élément de couverture tend à être facilitée. L'élément de couverture peut également avoir des dimensions plus importantes que celles des éléments de couverture de structure connue.

En particulier, le moyen de fixation est configuré pour immobiliser l'élément de couverture relativement à la chape.

L'invention est défini dans la revendication indépendante 1, et peut comporter de manière facultative une ou plusieurs des caractéristiques suivantes combinées entre elles ou non.

Selon une particularité de réalisation, l'élément de couverture comprend un marquage visuel qui est visible pour un utilisateur sur une surface avant de l'élément de couverture.

Selon une particularité de réalisation, l'élément de couverture est configuré pour couvrir latéralement tout le nez d'étrier en s'étendant en saillie latéralement par rapport à l'étrier.

Selon une autre particularité de réalisation, l'élément de couverture s'étend verticalement sur toute la hauteur du nez d'étrier.

De préférence, l'élément de couverture est configuré pour couvrir toute une surface avant de l'étrier qui délimite axialement l'étrier vers l'avant en cachant la surface axiale avant de l'étrier.

De préférence, l'élément de couverture est configuré pour cacher au moins partiellement au moins un des bras de la chape en s'étendant en saillie latéralement par rapport au nez d'étrier.

Selon une particularité de réalisation, l'élément de couverture est une plaque de couverture.

Selon une autre particularité de réalisation, l'élément de couverture comprend un couvercle.

Selon une particularité de réalisation, l'élément de couverture comprend une portion centrale et deux portions latérales s'étendant latéralement de part et d'autre de la portion centrale, les portions latérales étant décalées axialement vers l'arrière par rapport à la portion centrale.

Selon une particularité de réalisation, la portion centrale est configurée pour couvrir toute la surface avant de l'étrier, les portions latérales s'étendant en saillie latéralement de l'étrier en couvrant les bras de la chape.

De préférence, les portions latérales s'étendent en saillie latéralement de la chape.

De préférence, la portion centrale et les portions latérales cachent entièrement la chape.

L'invention porte également sur un frein à disque à étrier flottant qui comprend une chape qui est configurée pour être fixée à un véhicule, un étrier qui est monté mobile axialement par rapport à la chape entre une position avant de repos et une position arrière de freinage, et un élément de couverture tel que défini ci-dessus. L'élément de couverture est configuré pour couvrir le nez d'étrier en cachant au moins partiellement l'étrier et la chape.

Selon une particularité de réalisation, l'au moins une attache latérale est configurée pour raccorder l'élément de couverture à la chape en engageant mécaniquement une protubérance d'un bras de la chape.

De préférence, l'attache latérale est de forme complémentaire de celle de la protubérance du bras de la chape pour engager mécaniquement la protubérance par complémentarité de forme.

De préférence, l'attache latérale est configurée pour attacher l'élément de couverture à la chape par pincement de la protubérance.

Selon une particularité de réalisation, un ressort de rappel de patin est attaché à la protubérance pour raccorder le ressort de rappel de patin à la chape.

Selon une particularité de réalisation, l'attache inférieure est configurée pour engager mécaniquement par complémentarité de forme une surface extérieure sensiblement cylindrique de la barre de support de la chape.

L'invention porte en outre sur un procédé de raccordement d'un élément de couverture tel que défini ci-dessus à une chape d'un frein à disque à étrier flottant pour couvrir un nez d'étrier du frein à disque à étrier flottant en cachant au moins partiellement l'étrier et la chape. Le procédé de raccordement comprend une étape de fixation de l'élément de couverture à la chape.

L'étape de fixation de l'élément de couverture est mise en œuvre sur une ligne d'assemblage de frein lors de la fabrication du frein. En variante, l'étape de fixation est mise en œuvre lors de l'assemblage de la chape et de l'étrier sur un véhicule pour freiner une roue du véhicule.

### BRÈVE DESCRIPTION DES DESSINS

La présente invention sera mieux comprise à la lecture de la description d'exemples de réalisation, en référence aux dessins annexés sur lesquels :
- la figure 1 est une représentation schématique en perspective d'un frein à disque étrier flottant, selon un premier mode de réalisation ;
- la figure 2 est une représentation schématique partielle en perspective du frein à disque à étrier flottant selon le premier mode de réalisation ;
- la figure 3 est une représentation schématique partielle en perspective et en vue vers le dessus du frein à disque à étrier flottant selon le premier mode de réalisation ;
- la figure 4 est une représentation schématique éclatée du frein à disque à étrier flottant selon le premier mode de réalisation ;
- la figure 5 est une représentation schématique en perspective vers l'arrière de la plaque de couverture du frein à disque à étrier flottant selon le premier mode de réalisation ;
- la figure 6 est une représentation schématique en perspective vers l'avant de la plaque de couverture du frein à disque à étrier flottant selon le premier mode de réalisation ;
- la figure 7 illustre un procédé de fabrication du frein selon le premier mode de réalisation ou selon un deuxième mode de réalisation ;
- la figure 8 est une représentation schématique en perspective vers l'arrière d'un frein à disque étrier flottant, selon le deuxième mode de réalisation;
- la figure 9 est une représentation schématique en perspective vers l'avant d'un frein à disque étrier flottant selon le deuxième mode de réalisation ;
- la figure 10 est une représentation schématique en perspective vers l'arrière d'un couvercle du frein à disque à étrier flottant ;
- la figure 11 est une représentation schématique en perspective vers l'avant d'un couvercle du frein à disque à étrier flottant.

### EXPOSÉ DÉTAILLÉ DE MODES DE RÉALISATION PARTICULIERS

Des parties identiques, similaires ou équivalentes des différentes figures portent les mêmes références numériques de façon à faciliter le passage d'une figure à l'autre.

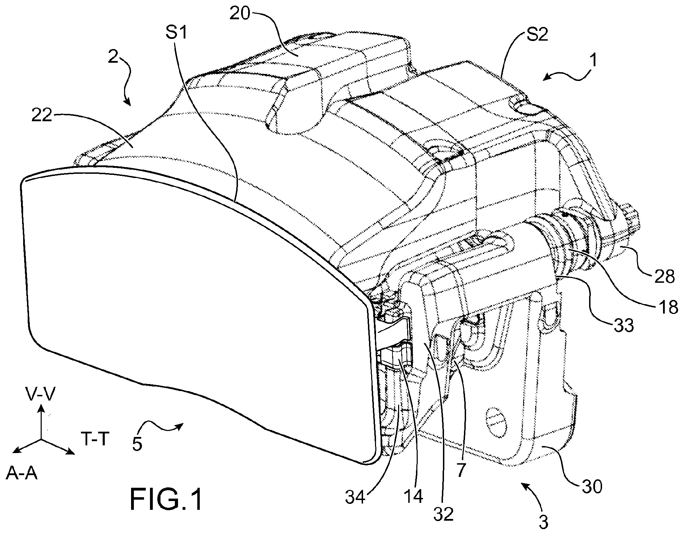

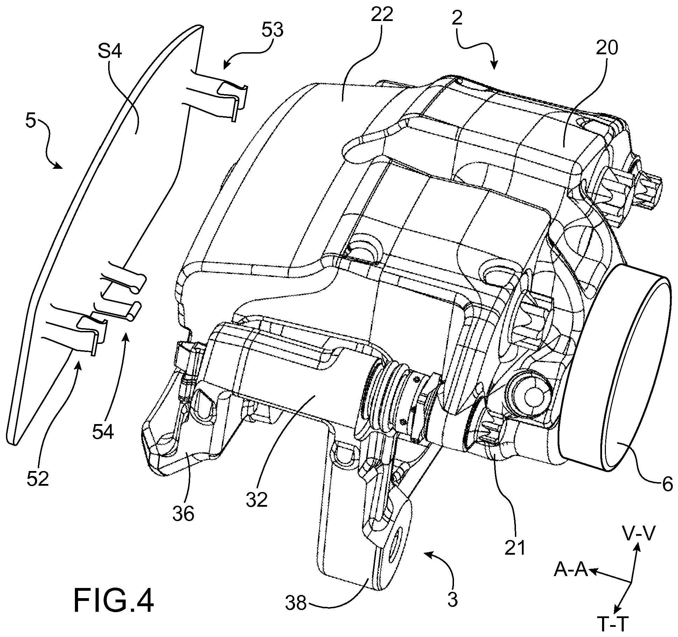

La figure 1 et la figure 4 représentent un frein 1 à disque à étrier flottant pour freiner une roue d'un véhicule motorisé, selon un premier mode de réalisation de l'invention. Le frein 1 peut être un frein pour un véhicule motorisé à deux roues, à trois roues ou plus.

Le frein 1 à disque à étrier flottant comprend un étrier 2, une chape 3, un actionneur 6, un piston 11, un disque (non représenté), deux patins 7, deux colonnettes de guidage 18, deux ressorts 14 de rappel de patin et un élément de couverture 5. Le frein à disque 1 peut être utilisé pour le freinage de service, le freinage de sécurité, le freinage d'urgence et/ou le freinage de stationnement du véhicule motorisé.

Dans le document et dans la suite de l'exposé, une direction axiale A-A est une direction parallèle à l'axe de rotation du disque. Il s'agit d'une direction générale de déplacement des patins 7 relativement au disque et de déplacement de l'étrier 2 relativement à la chape 3. Une direction latérale, transversale ou tangentielle T-T est une direction latérale du frein, qui est orthogonale à la direction axiale A-A. Une direction verticale V-V est une direction qui est orthogonale à la direction axiale A-A et à la direction tangentielle T-T. La direction verticale V-V correspond typiquement à une direction de la hauteur du frein.

L'étrier 2 comprend un corps 20 d'étrier, un nez d'étrier 22 et un cylindre 21 de logement du piston. Il est traversé par un orifice central (non représenté) qui sert à usiner le cylindre 21 de logement du piston.

L'étrier 2 est délimité axialement par une surface avant S1 qui fait partie du nez d'étrier 22 et il est délimité axialement vers l'arrière par une surface arrière S2 qui est une surface de raccordement de l'étrier 2 à l'actionneur 6.

L'étrier 2 est de type flottant dans le mode de réalisation représenté, en étant monté mobile en translation axialement par rapport à la chape 3 entre une position avant de repos et une position arrière de freinage.

Le corps 20 de l'étrier forme une voûte qui chevauche le disque. Il recouvre le cylindre 21 de logement du piston. L'arrière du corps 20 de l'étrier comporte deux oreillettes 28 de fixation des colonnettes de guidage 18.

Le nez d'étrier 22 est situé à l'avant du corps 20 de l'étrier. Il peut comporter deux doigts qui s'étendent verticalement latéralement de part et d'autre de l'orifice central ou bien il peut comporter une paroi verticale avant qui délimite l'étrier 2 vers l'avant.

La chape 3 est fixée au châssis du véhicule, par exemple à un porte fusée du véhicule. Elle chevauche un bord périphérique du disque. La chape 3 s'étend notamment tangentiellement par rapport au disque sur une longueur tangentielle qui est supérieure à une longueur tangentielle de l'étrier 2 relativement au disque. La chape 3 enserre notamment tangentiellement l'étrier 2. La chape 3 comporte un bâti 30 et deux bras 32 latéraux. Elle est notamment monobloc. La chape 3 forme une partie fixe du frein 1 et elle sert de support à l'étrier 2.

Le bâti 30 comporte une première barre de support 36 et une deuxième barre de support 38 qui sont espacées axialement l'une de l'autre, la première barre de support 36 étant située axialement en avant de la deuxième barre de support 38. La première barre de support 36 et la deuxième barre de support 38 s'étendent longitudinalement selon la direction tangentielle T-T. Elles sont agencées sensiblement en parallèle l'une de l'autre entre les bras 32 de la chape. La première barre de support 36 et la deuxième barre de support 38 sont chacune reliées à leur extrémité supérieure selon la direction verticale V-V aux bras 32 de la chape.

Chacune de la première barre de support 36 et de la deuxième barre de support 38 est délimitée radialement vers l'extérieur relativement à la direction tangentielle T-T et entre les deux bras 32 de la chape par une surface extérieure sensiblement cylindrique. Chacune des barres de support 36, 38 est sans protubérance pour y attacher le couvercle 5b.

Chacun des bras 32 de la chape s'étend longitudinalement selon la direction axiale A-A, sensiblement entre la première barre de support 36 et la deuxième barre de support 38. Les bras 32 sont sensiblement parallèles l'un à l'autre. Les bras 32 sont espacés latéralement l'un de l'autre, en étant situés de part et d'autre du corps 20 d'étrier selon la direction tangentielle T-T.

Les bras 32 de la chape délimitent chacun un orifice de guidage 33 qui forme un logement pour une des colonnettes de guidage 18. Les bras 32 comportent chacun une protubérance 34 qui est située sur une surface avant de chaque bras 32. La protubérance 34 de chaque bras 32 est formée par un bossage qui est en saillie axialement. Cette protubérance 34 prend la forme d'une nervure verticale dans chacun des deux modes de réalisation représentés. Chaque protubérance 34 sert à attacher un ressort 14 de rappel de patin à un des bras 32 de la chape et à attacher l'élément de couverture 5 au bras 32.

Le disque est solidaire en rotation de la roue du véhicule motorisé. Il tourne autour d'un axe de rotation qui est orienté axialement.

Les patins 7 comprennent chacun une plaque de support 70 et une garniture de freinage 71 qui est fixée à la plaque de support 70. Ils sont notamment de structure identique. Les patins 7 sont situés à l'intérieur de la chape 3 axialement de part et d'autre du disque. Ils sont derrière l'élément de couverture 5 qui les cache. Les patins 7 sont chacun mobiles axialement entre une position inactive de retrait dans laquelle le frein 1 ne freine pas la roue et une position active de freinage dans laquelle ils enserrent le disque pour freiner la roue.

Chaque plaque de support 70 comporte une première face à laquelle est fixée la garniture de freinage 71 et une deuxième face qui est opposée à la première face. Chacune des extrémités transversales opposées de la plaque de support 70 comporte des oreilles latérales pour raccorder le patin 7 à la chape 3. La garniture de freinage 71 comporte un matériau qui est configuré pour freiner par friction la rotation du disque lorsqu'il est au contact du disque.

Le piston 11 est logé dans le cylindre 21 de logement du piston. Le piston 11 est mobile axialement en translation par rapport au corps 20 d'étrier, sous l'effet de l'actionneur 6. Le déplacement du piston 11 selon la direction axiale A-A permet de rapprocher les patins 7 l'un de l'autre pour freiner la roue.

L'actionneur 6 est configuré pour déplacer le piston 11 en translation selon la direction axiale A-A. L'actionneur 6 est hydraulique et/ou électromécanique. Il sert au freinage de service et/ou au freinage de stationnement du véhicule motorisé.

Les colonnettes de guidage 18 coulissent axialement dans les orifices de guidage 33 pour guider axialement l'étrier 2 relativement à la chape 3 lors du freinage ou du défreinage.

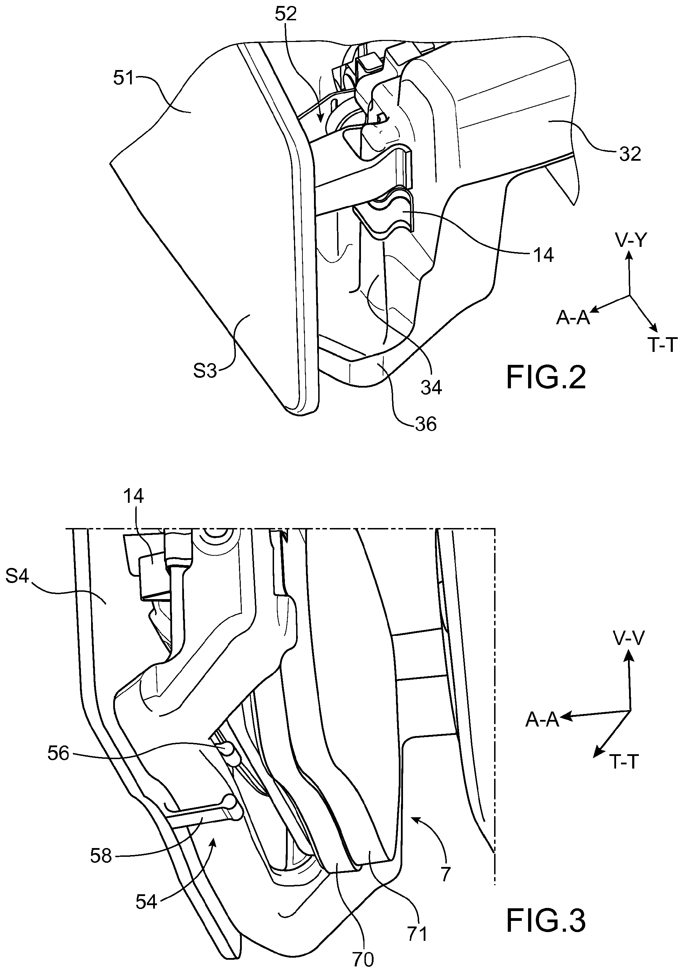

En référence aux figures 1 à 6 et 8 à 11, l'élément de couverture 5 comprend un marquage visuel 51 et un moyen de fixation 50 pour fixer l'élément de couverture 5 à la chape 3. En position de repos du frein 1 et lorsque l'étrier 2 est en position avant de repos, l'élément de couverture 5 est notamment configuré pour être au contact mécanique direct de la surface avant S1 de l'étrier. L'élément de couverture 5 est à distance axialement de l'étrier 2 lorsque l'étrier 2 est en position arrière de freinage. L'élément de couverture 5 est mobile relativement à l'étrier 2, lorsque l'étrier 2 est mobile relativement à la chape 3 entre la position avant de repos et la position arrière de freinage.

L'élément de couverture 5 couvre latéralement tout le nez d'étrier 22 en s'étendant en saillie latéralement par rapport à l'étrier 2. L'élément de couverture 5 s'étend verticalement sur toute la hauteur du nez d'étrier 22 en cachant le nez d'étrier 22 sur toute sa hauteur.

L'élément de couverture 5 est configuré pour couvrir le nez d'étrier 22 du frein 1 à disque à étrier flottant en cachant l'intérieur du frein 1. Il est configuré pour cacher au moins partiellement l'étrier 2 et la chape 3. L'élément de couverture 5 est notamment configuré pour couvrir et pour cacher toute la surface avant S1 de l'étrier, en particulier l'orifice central à travers le nez d'étrier 22. L'élément de couverture 5 masque notamment l'étrier 2 lorsqu'il est regardé à travers la jante de la roue de véhicule portant le frein 1 à disque.

L'élément de couverture 5 est configuré pour cacher au moins partiellement au moins un des bras 32 de la chape en s'étendant en saillie latéralement par rapport au nez d'étrier 22. L'élément de couverture 5 masque par exemple également la chape 3 pour un observateur placé dans l'axe de rotation de la roue portant le frein 1 à disque. L'élément de couverture 5 masque notamment la chape 3 lorsqu'elle est regardée à travers la jante de la roue de véhicule portant le frein 1 à disque.

Dans chacun des modes de réalisation représentés, le moyen de fixation 50 comprend une première attache latérale 52, une deuxième attache latérale 53 et une attache inférieure 54. Le moyen de fixation 50 est configuré pour fixer l'élément de couverture 5 à la chape 3 de frein 1 à disque à étrier flottant. En particulier, le moyen de fixation 50 immobilise l'élément de couverture 5 relativement à la chape 3.

Dans chacun des modes de réalisation représentés, chacune des attaches 52, 53, 54 comprend deux branches 56, 58, 61, 63, pour attacher l'élément de couverture 5 par pincement à la chape 3 de frein 1 à disque à étrier flottant. Chaque l'attache 52, 53, 54 est configurée pour être raccordée mécaniquement à la chape 3 par complémentarité de forme, notamment par emboitement.

Dans chacun des modes de réalisation représentés, chaque attache 52, 53, 54 est cachée par l'élément de couverture 5 lorsque l'élément de couverture 5 est fixé à la chape 3. De plus, chaque attache 52, 53, 54 est conçue pour être raccordée à la chape 3 par un opérateur sans utiliser d'outil.

Les attaches latérales 52, 53 sont situées à proximité de deux extrémités latérales opposées de l'élément de couverture 5. Dans les deux modes de réalisation représentés, elles sont situées dans une portion supérieure de l'élément de couverture 5.

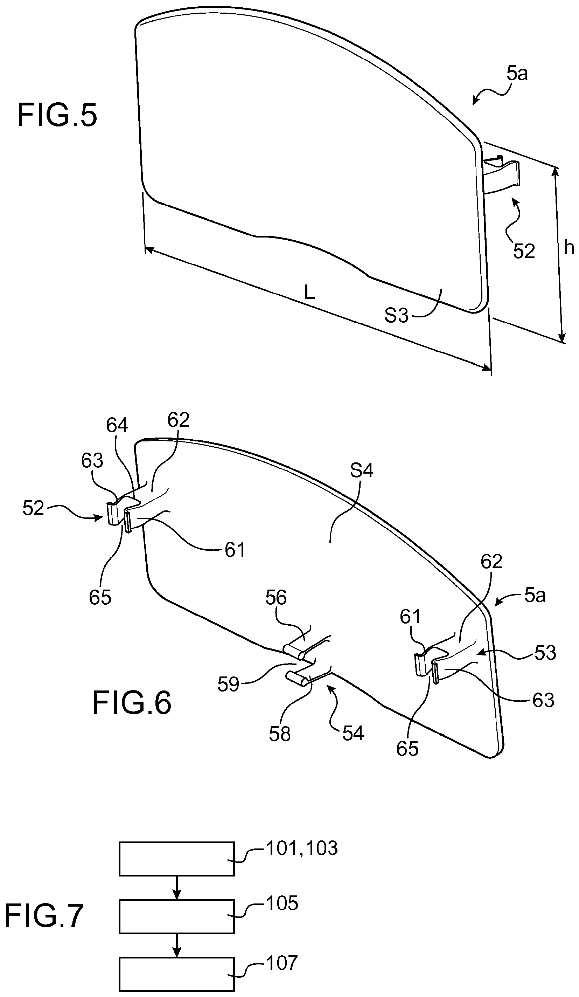

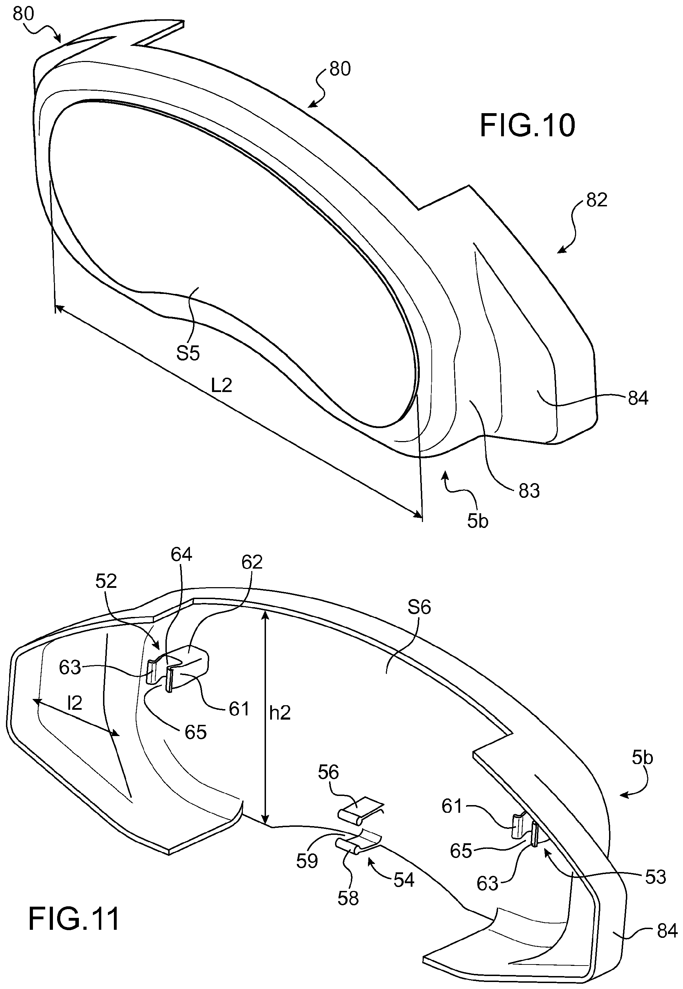

En référence en particulier aux figures 6 et 11, chaque attache latérale 52, 53 comprend une première branche latérale interne 61, une deuxième branche latérale externe 63 et une embase 62. La branche latérale interne 61 et la branche latérale externe 63 s'étendent chacune axialement vers l'arrière depuis l'embase 62 qui les relie à une surface arrière S4, S6 de l'élément de couverture 5. Elles sont sensiblement parallèles l'une à l'autre lorsqu'elles sont au repos. La branche latérale interne 61 et la branche latérale externe 63 sont configurées pour se déformer élastiquement vers l'extérieur lorsqu'elles sont raccordées à la protubérance 34 du bras 32 de la chape, de manière à pincer la protubérance 34 du bras. La branche latérale interne 61, la branche latérale externe 63 et l'embase 62 délimitent conjointement un évidement 65 de logement de la protubérance 34 du bras de la chape. L'évidement 65 est de forme sensiblement complémentaire de celle de la protubérance 34.

Les attaches latérales 52, 53 chacune configurées pour attacher l'élément de couverture 5 à un des bras 32 de la chape. Les attaches latérales 52, 53 engagent chacune mécaniquement la protubérance 34 par complémentarité de forme et elles pincent la protubérance 34, pour attacher l'élément de couverture 5 au bras 32 de la chape.

L'attache inférieure 54 est située à une extrémité inférieure de l'élément de couverture 5. L'attache inférieure 54 est située sensiblement au milieu de l'élément de couverture 5 selon la direction tangentielle T-T. L'attache inférieure 54 est située sensiblement à équidistance de la première attache latérale 52 et de la deuxième attache latérale 53. Elle forme sensiblement un triangle isocèle avec les attaches latérales 52, 53.

En référence en particulier aux figures 6 et 11, l'attache inférieure 54 comprend une branche verticale supérieure 56 et une branche verticale inférieure 58. Elle est sans embase.

La branche verticale supérieure 56 et la branche verticale inférieure 58 s'étendent chacune axialement vers l'arrière depuis la surface arrière S4, S6 de l'élément de couverture 5. Elles sont sensiblement parallèles l'une à l'autre lorsqu'elles sont au repos. La branche verticale supérieure 56 et la branche verticale inférieure 58 sont configurées pour se déformer élastiquement vers l'extérieur lorsqu'elles sont raccordées à la première barre de support 36, de manière à pincer la première barre de support 36. La branche verticale supérieure 56 et la branche verticale inférieure 58 délimitent conjointement un évidement 59 de logement de la première barre de support 36. L'évidement 59 est de forme sensiblement complémentaire de celle de la surface extérieure sensiblement cylindrique de la première barre de support 36 de la chape 3.

L'attache inférieure 54 est configurée pour attacher l'élément de couverture 5 à la première barre de support 36 de la chape 3. L'attache inférieure 54 engage mécaniquement la surface extérieure de la première barre de support 36 par complémentarité de forme et elle pince la surface extérieure de la première barre de support 36, pour attacher l'élément de couverture 5 au bâti 30 de la chape.

Le marquage visuel 51 est visible pour un utilisateur sur une surface avant S3, S5 de l'élément de couverture 5. Le marquage visuel 51 est par exemple réalisé par enlèvement de matière telle que par gravure, par peinture ou par impression. Le marquage visuel 51 comporte par exemple un signe distinctif du fabricant de frein 1 à disque à étrier flottant et/ou celui du fabricant du véhicule qui comporte le frein 1.

En référence plus spécifiquement au premier mode de réalisation qui est représenté aux figures 1 à 6, l'élément de couverture 5 est une plaque de couverture 5a. La surface avant S3 de la plaque de couverture et la surface arrière S4 de la plaque de couverture 5a sont chacune sensiblement planes. La plaque de couverture 5a s'étend latéralement sur une largeur L qui est supérieure à celle de l'étrier 2, jusqu'aux bras 32 de la chape. Elle s'étend verticalement sur une hauteur h qui est égale à celle du frein 1 au niveau de la surface avant S1 de l'étrier 2 en cachant verticalement la première barre de support 36 et le nez d'étrier 22.

La plaque de couverture 5a est de forme généralement rectangulaire dans le premier mode de réalisation. Elle comprend un contour supérieur qui épouse celui de la surface avant S1 du nez d'étrier 22, en forme d'arc de cercle dans le premier mode de réalisation représenté. Le contour supérieur de la plaque de couverture 5a affleure sensiblement à celui du nez d'étrier 22. La plaque de couverture 5a comprend un contour inférieur qui épouse sensiblement celui de la barre inférieure de support 36, en affleurant notamment au contour inférieur de la première barre de support 36. Elle comporte des contours latéraux rectilignes dans le premier mode de réalisation.

La figure 7 illustre un procédé de fabrication 100 d'un frein 1 à disque à étrier flottant selon le premier mode de réalisation ou selon le deuxième mode de réalisation. Le procédé de fabrication 100 comprend une étape de fabrication 101 de l'étrier 2 et une étape de fabrication 103 de la chape 3 sur une ligne de fabrication et d'assemblage de frein 1. Le procédé de fabrication 100 comporte également une étape de fabrication 105 de l'élément de couverture 5 sur la ligne de fabrication et d'assemblage du frein 1. Le procédé de fabrication 100 inclut une étape de fixation 107 de l'élément de couverture 5 à la chape 3 pour couvrir le nez d'étrier 22.

L'étape de fixation 107 de l'élément de couverture 5 peut être mise en œuvre sur la ligne d'assemblage et de fabrication du frein 1. En variante, l'étape de fixation 107 de l'élément de couverture 5 peut être mise en œuvre lors de l'assemblage de la chape 3 et de l'étrier 2 sur un véhicule pour freiner une roue du véhicule.

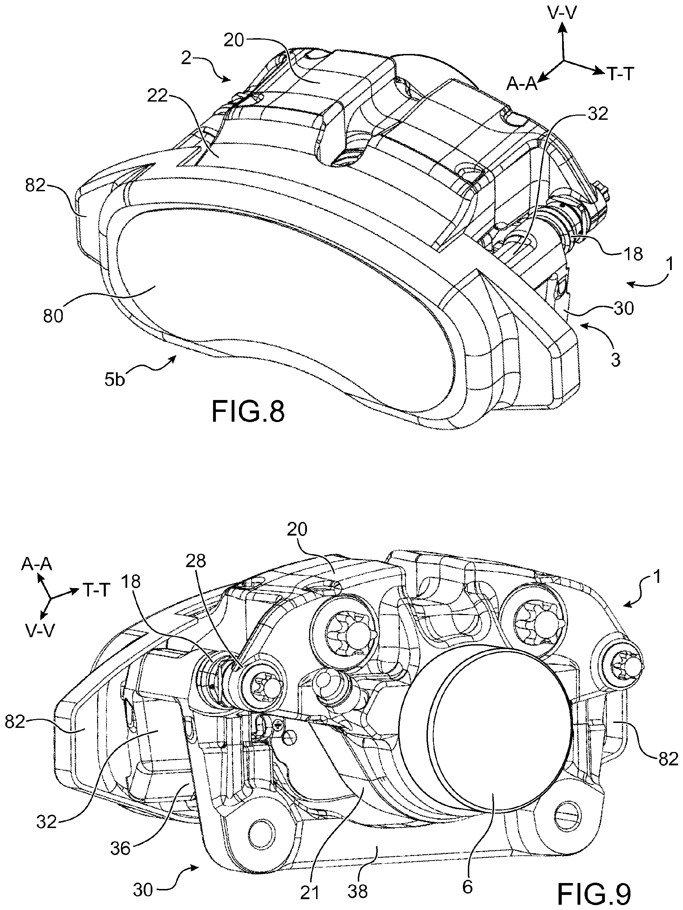

En référence plus spécifiquement au deuxième mode de réalisation qui est représenté aux figures 8 à 11, l'élément de couverture 5 est un couvercle 5b. Le couvercle 5b comprend une portion centrale 80 et deux portions latérales 82 qui s'étendent latéralement de part et d'autre de la portion centrale 80. Les portions latérales 82 sont décalées axialement vers l'arrière par rapport à la portion centrale 80.

Le couvercle 5b est configuré pour cacher entièrement la chape 3 et le nez d'étrier 22 en regardant le frein 1 axialement vers l'arrière depuis le couvercle 5b.

La portion centrale 80 est constituée d'une paroi de fond 81 en forme de plaque qui est de forme similaire à celle de la plaque de couverture 5a du frein 1 selon le premier mode de réalisation de l'invention. En particulier, la surface avant S5 de la portion centrale 80 et la surface arrière de la portion centrale 80 sont chacune sensiblement planes.

La portion centrale 80 comprend un contour supérieur qui épouse celui de la surface avant S1 du nez d'étrier 22, en forme d'arc de cercle dans le deuxième mode de réalisation représenté. Le contour supérieur de la portion centrale 80 affleure sensiblement à celui du nez d'étrier 22. La portion centrale 80 comprend un contour inférieur qui épouse sensiblement celui de la barre inférieure de support 36, en affleurant notamment au contour inférieur de la première barre de support 36.

La portion centrale 80 s'étend latéralement sur une largeur L2 qui est supérieure à celle de l'étrier 2, jusqu'aux bras 32 de la chape. Elle s'étend verticalement sur une hauteur h2 qui est égale à celle du frein 1 au niveau de la surface avant S1 de l'étrier 2 en cachant verticalement la première barre de support 36 et le nez d'étrier 22.

Les portions latérales 82 sont de structures sensiblement identiques. Elles comprennent chacune paroi de raccordement 83 et une paroi latérale extérieure 84. Les portions latérales 82 s'étendent en saillie latéralement de la chape 3, en enveloppant les bras 32 pour les cacher en vue axiale vers l'arrière.

Les portions latérales 82 s'étendent latéralement chacune sur une largeur l2 depuis la portion centrale 80 et depuis les bras 32 de la chape. Les portions latérales 82 s'étendent chacune sur sensiblement toute la hauteur h2 de la portion centrale 80.

La paroi de raccordement 83 est incurvée, en ayant une composante axiale. Elle relie la portion centrale 80 à la paroi latérale 84. La paroi latérale extérieure 84 délimite latéralement le couvercle 5b et le frein 1 à disque à étrier flottant vers l'extérieur. Elle couvre davantage un bras 32 de la chape, en étant décalé axialement vers le bras 32 par rapport à la portion centrale 80.

Grâce à la fixation d'un élément de couverture 5 selon l'invention à la chape 3 du frein 1 à disque à étrier flottant, un élément de couverture 5 de grandes dimensions tend à être fixé plus solidement au frein 1 et la fixation de l'élément de couverture 5 tend à être facilitée. L'élément de couverture 5 peut également avoir des dimensions plus importantes que celles des éléments de couverture 5 de structure connue.

En étant fixée au châssis du véhicule, typiquement au porte fusée, la position de la chape 3 vue à travers la jante ne varie pas lors de l'application des patins 7 sur le disque de la roue portant le frein 1 à disque. L'élément de couverture 5 étant fixé à la chape 3, la position de l'élément de couverture 5 vu à travers la jante ne varie pas lors de l'application de patins 7 sur le disque de la roue portant le frein à disque.

Les attaches latérales 52, 53 sont avantageusement raccordées à une protubérance 34 préexistante de la chape 3, pour y attacher le ressort 14 de rappel de patin. La fabrication du frein 1 à disque à étrier flottant est alors facilitée.

L'attache inférieure 54 est raccordée à la première barre de support 36 qui est un élément structurel du frein 1 à disque à étrier flottant. Par ailleurs, elle pince une surface plus importante de la barre de support 36 que la surface extérieures des protubérances 34 qui sont pincées par les attaches latérales 52, 53. La fixation de l'élément de couverture 5 à la chape 3 tend ainsi à être renforcée.

La plaque de couverture 5a est relativement facile à fabriquer du fait de sa forme. Elle est plutôt moins couteuse à fabriquer que le couvercle 5b, en particulier en nécessitant moins de matériau pour sa fabrication.

Le couvercle 5b couvre davantage le nez d'étrier 22 et la chape 3 que la plaque de couverture 5a. Il tend notamment à mieux cacher l'étrier 2 et la chape 3 latéralement que la plaque de couverture 5a.

Bien entendu, diverses modifications peuvent être apportées par l'homme du métier à l'invention qui vient d'être décrite sans sortir du cadre de l'exposé de l'invention.

En variante, le frein 1 à disque à étrier flottant ne comporte pas de ressort 14 de rappel de patin.

En variante encore, le ressort 14 de rappel de patin n'est pas raccordé à la chape 3 par une protubérance 34, par exemple lorsqu'il est retenu par la chape 3 en prenant appui sur la chape 3.

En plus ou en variante, le bras de la chape 3 est dépourvu de protubérance 34. Chaque attache latérale 52, 53 est configurée pour être raccordée à une surface extérieure partiellement cylindrique du bras de la chape 3.

En plus ou en variante, la barre de support 36 comprend au moins une protubérance que l'attache inférieure 54 est configurée pour engager mécaniquement pour raccorder l'élément de couverture 5 à la chape 3. Cette protubérance prend alors par exemple la forme d'une nervure latérale de la première barre de support 36.

Dans ce cas, l'attache inférieure 54 peut être de forme complémentaire de celle de la protubérance de la barre de support 36 pour engager mécaniquement la protubérance par complémentarité de forme. En plus ou en variante, l'attache inférieure 54 peut être configurée pour attacher l'élément de couverture 5 à la chape 3 par pincement de la protubérance.

En plus ou en variante, l'élément de couverture 5 est assemblé de manière détachable à la chape 3 par le moyen de fixation 50, en particulier pour pouvoir remplacer l'élément de couverture 5.

En plus ou en variante, l'élément de couverture 5 est également à distance de la surface avant S1 de l'étrier 2, lorsque le frein 1 est en position de repos et que l'étrier 2 est en position avant de repos.

En plus ou en variante, le moyen de fixation 50 comprend un élément de fixation de l'élément de couverture 5 à la chape 3, par exemple de type vis-écrou.

En plus ou en variante, le moyen de fixation 50 comprend une seule attache latérale 52, 53. Le moyen de fixation peut également comporter plusieurs attaches latérales 52, 53 espacées selon la direction verticale V-V, notamment de chaque côté de l'étrier 2.

En plus ou en variante, le moyen de fixation 50 comprend au moins deux attaches inférieures 54 qui sont espacées latéralement pour attacher l'élément de couverture 5 à la barre de support 36.

L'élément de couverture 5 peut également comporter une attache pour attacher l'élément de couverture 5 au nez d'étrier 22.

### NOMENCLATURE EN REFERENCE AUX FIGURES

1 : frein à disque à étrier flottant
2 : étrier
3 : chape
4 : étrier flottant
5 : élément de couverture
6 : actionneur
5a : plaque de couverture
5b : couvercle
7 : patin de frein
11 : piston
14 : ressort de rappel de patin
18 : colonnette de guidage
20 : corps d'étrier
21 : cylindre de logement du piston
22 : nez d'étrier
24 : doigt latéral
28 : oreillette de fixation des colonnettes de guidage
30 : bâti
32 : bras
33 : orifice de guidage des colonnettes de guidage
34 : protubérance de fixation
36 : première barre de support de la chape
38 : deuxième barre de support de la chape
50 : moyen de fixation
51 : marquage visuel
52 : première attache latérale
53 : deuxième attache latérale
54 : attache inférieure
56 : branche verticale supérieure
58 : branche verticale inférieure
59 : évidement de logement de la barre de support
61 : branche latérale interne
62 : embase
63 : branche latérale externe
64 : paroi de fond de l'embase
65 : évidement de logement de la protubérance
70 : support de patin de frein
71 : garniture de freinage
72 : oreille de patin
80 : portion centrale
81 : paroi de fond
82 : portion latérale
83 : paroi de raccordement
84 : paroi latérale extérieure
100 : procédé de fabrication
101, 103 : fabrication de l'étrier et de la chape
105 : fabrication de l'élément de couverture
107 : fixation de l'élément de couverture à la chape
A-A : direction axiale
T-T : direction tangentielle ou latérale
V-V : direction verticale ou de la hauteur
L : largeur de la plaque de couverture
h : hauteur de la plaque de couverture
L2 : largeur du couvercle
L2 : largeur de la portion latérale
h2 : hauteur du couvercle
S1 : surface axiale avant de l'étrier
S2 : surface axiale arrière de raccordement de l'étrier à l'actionneur électromécanique
S3 : surface axiale avant de la plaque de couverture
S4 : surface axiale arrière de la plaque de couverture
S5 : surface avant du couvercle
S6 : surface arrière du couvercle

## Revendications

1. Frein (1) à disque à étrier flottant, comprenant une chape (3) qui est configurée pour être fixée à un véhicule, un étrier (2) qui est monté mobile axialement par rapport à la chape (3) entre une position avant de repos et une position arrière de freinage, et un élément de couverture (5) configuré pour couvrir un nez d'étrier (22) de l'étrier (2) en cachant au moins partiellement l'étrier (2) et la chape (3), l'élément de couverture (5) comprenant un moyen de fixation (50) comprenant deux attaches latérales (52, 53) qui sont latéralement opposées pour attacher l'élément de couverture (5) à deux bras (32) latéralement opposés de la chape (3), ce moyen de fixation (50) étant **caractérisé par le fait qu'**il comprend de plus au moins une attache inférieure (54) qui est configurée pour attacher l'élément de couverture (5) à une barre de support (36) de la chape (3), la barre de support (36) s'étendant latéralement entre les deux bras (32) latéralement opposés de la chape (3), moyennant quoi le moyen de fixation (50) fixe l'élément de couverture (5) à la chape (3), en immobilisant l'élément de couverture (5) par rapport à la chape (3).

2. Frein (1) à disque à étrier flottant selon la revendication précédente, dans lequel au moins l'une des attaches (52, 53, 54) du moyen de fixation (50) comprend deux branches (61, 63, 56, 58) pour attacher l'élément de couverture (5) par pincement à la chape (3), et/ou est configurée pour être raccordée mécaniquement à la chape (3) par complémentarité de forme, notamment par emboitement.

3. Frein (1) à disque à étrier flottant selon l'une quelconque des revendications précédentes, dans lequel l'élément de couverture (5) comprend un marquage visuel (51) qui est visible pour un utilisateur sur une surface avant (S3, S5) de l'élément de couverture (5).

4. Frein (1) à disque à étrier flottant selon l'une quelconque des revendications précédentes, dans lequel l'élément de couverture (5) est configuré pour couvrir latéralement tout le nez d'étrier (22) en s'étendant en saillie latéralement par rapport à l'étrier (2), et/ou dans lequel l'élément de couverture (5) s'étend verticalement sur toute la hauteur du nez d'étrier (22),
l'élément de couverture (5) étant de préférence configuré pour couvrir toute une surface avant (S1) de l'étrier qui délimite axialement l'étrier (2) vers l'avant en cachant la surface axiale avant de l'étrier, et/ou l'élément de couverture (5) étant de préférence configuré pour cacher au moins partiellement au moins un des bras (32) de la chape en s'étendant en saillie latéralement par rapport au nez d'étrier (22).

5. Frein (1) à disque à étrier flottant selon l'une quelconque des revendications précédentes, dans lequel l'élément de couverture (5) est une plaque de couverture (5a) ou dans lequel l'élément de couverture (5) comprend un couvercle (5b).

6. Frein (1) à disque à étrier flottant selon la revendication précédente, dans lequel l'élément de couverture (5) comprend une portion centrale (80) et deux portions latérales (82) s'étendant latéralement de part et d'autre de la portion centrale (80), les portions latérales (82) étant décalées axialement vers l'arrière par rapport à la portion centrale (80).

7. Frein (1) à disque à étrier flottant selon les revendications 4 à 6, dans lequel la portion centrale (80) est configurée pour couvrir toute la surface avant (S1) de l'étrier, les portions latérales (82) s'étendant en saillie latéralement de l'étrier (2) en couvrant les bras (32) de la chape,
les portions latérales (82) s'étendant de préférence en saillie latéralement de la chape (3) et/ou la portion centrale (80) et les portions latérales (82) cachant de préférence entièrement la chape (3).

8. Frein (1) à disque à étrier flottant selon l'une quelconque des revendications 1 à 7, dans lequel chaque attache latérale (52, 53) est configurée pour raccorder l'élément de couverture (5) à la chape (3) en engageant mécaniquement une protubérance (34) d'un bras (32) de la chape,
l'attache latérale (52, 53) étant de préférence de forme complémentaire de celle de la protubérance (34) du bras (32) de la chape pour engager mécaniquement la protubérance (34) par complémentarité de forme et/ou l'attache latérale (52, 53) étant de préférence configurée pour attacher l'élément de couverture (5) à la chape (3) par pincement de la protubérance (34).

9. Frein (1) à disque à étrier flottant selon la revendication précédente, dans lequel un ressort (14) de rappel de patin est attaché à la protubérance (34) pour raccorder le ressort de rappel de patin à la chape (3).

10. Frein (1) à disque à étrier flottant selon la revendication 2 ou selon l'une quelconque des revendications 3 à 9, prise en combinaison avec la revendication 2, dans lequel l'attache inférieure (54) est configurée pour engager mécaniquement par complémentarité de forme une surface extérieure sensiblement cylindrique de la barre de support (36) de la chape (3).

11. Procédé (100) de raccordement d'un élément de couverture (5) à une chape (3) d'un frein (1) à disque à étrier flottant selon l'une quelconque des revendications 1 à 7 pour couvrir un nez d'étrier (22) du frein (1) à disque à étrier flottant en cachant au moins partiellement l'étrier et la chape (3), comprenant une étape de fixation (107) de l'élément de couverture (5) à la chape (3),
l'étape de fixation (107) de l'élément de couverture (5) étant mise en œuvre sur une ligne d'assemblage de frein lors de la fabrication du frein (1), ou l'étape de fixation étant mise en œuvre lors de l'assemblage de la chape (3) et de l'étrier (2) sur un véhicule pour freiner une roue du véhicule.

## Patentansprüche

1. Schwimmsattel-Scheibenbremse (1), umfassend einen Gabelkopf (3), der so ausgebildet ist, dass er an einem Fahrzeug befestigt ist, einen Bremssattel (2), der in Bezug auf den Gabelkopf (3) axial beweglich zwischen einer vorderen Ruheposition und einer hinteren Bremsposition montiert ist, und ein Abdeckelement (5), das so ausgebildet ist, dass es eine Bremssattelnase (22) des Bremssattels (2) abdeckt, indem es den Bremssattel (2) und den Gabelkopf (3) mindestens teilweise verdeckt, wobei das Abdeckelement (5) ein Befestigungsmittel (50) umfasst, das zwei seitliche Halterungen (52, 53) umfasst, die sich seitlich gegenüberliegen, um das Abdeckelement (5) an zwei sich seitlich gegenüberliegenden Armen (32) des Gabelkopfes (3) anzubringen, wobei dieses Befestigungsmittel (50) **dadurch gekennzeichnet ist, dass** es ferner mindestens eine untere Halterung (54) umfasst, die so ausgebildet ist, dass sie das Abdeckelement (5) an einer Stützstange (36) des Gabelkopfes (3) anbringt, wobei sich die Stützstange (36) seitlich zwischen den beiden seitlich gegenüberliegenden Armen (32) des Gabelkopfes (3) erstreckt, wobei das Befestigungsmittel (50) das Abdeckelement (5) am Gabelkopf (3) befestigt, indem es das Abdeckelement (5) in Bezug auf den Gabelkopf (3) fixiert.

2. Schwimmsattel-Scheibenbremse (1) nach dem vorhergehenden Anspruch, wobei mindestens eine der Halterungen (52, 53, 54) des Befestigungsmittels (50) zwei Schenkel (61, 63, 56, 58) umfasst, um das Abdeckelement (5) durch Festklemmen am Gabelkopf (3) anzubringen, und/oder so ausgebildet ist, dass es durch Formkomplementarität, insbesondere durch Einrasten, mechanisch mit dem Gabelkopf (3) verbunden werden kann.

3. Schwimmsattel-Scheibenbremse (1) nach einem der vorhergehenden Ansprüche, wobei das Abdeckelement (5) eine visuelle Markierung (51) umfasst, die für einen Benutzer auf einer Vorderfläche (S3, S5) des Abdeckelements (5) sichtbar ist.

4. Schwimmsattel-Scheibenbremse (1) nach einem der vorhergehenden Ansprüche, wobei das Abdeckelement (5) so ausgebildet ist, dass es die gesamte Bremssattelnase (22) seitlich abdeckt, indem es sich in Bezug auf den Bremssattel (2) seitlich vorstehend erstreckt, und/oder wobei sich das Abdeckelement (5) vertikal über die gesamte Höhe der Bremssattelnase (22) erstreckt,
wobei das Abdeckelement (5) vorzugsweise so ausgebildet ist, dass es eine ganze Vorderfläche (S1) des Bremssattels abdeckt, die den Bremssattel (2) axial nach vorne begrenzt, indem sie die vordere axiale Fläche des Bremssattels verdeckt, und/oder wobei das Abdeckelement (5) vorzugsweise so ausgebildet ist, dass es mindestens einen der Arme (32) des Gabelkopfs mindestens teilweise verdeckt, indem es sich in Bezug auf die Bremssattelnase (22) seitlich vorstehend erstreckt.

5. Schwimmsattel-Scheibenbremse (1) nach einem der vorhergehenden Ansprüche, wobei das Abdeckelement (5) eine Abdeckplatte (5a) ist oder wobei das Abdeckelement (5) einen Deckel (5b) umfasst.

6. Schwimmsattel-Scheibenbremse (1) nach dem vorhergehenden Anspruch, wobei das Abdeckelement (5) einen mittleren Abschnitt (80) und zwei seitliche Abschnitte (82) umfasst, die sich seitlich auf beiden Seiten des mittleren Abschnitts (80) erstrecken, wobei die seitlichen Abschnitte (82) in Bezug auf den mittleren Abschnitt (80) axial nach hinten versetzt sind.

7. Schwimmsattel-Scheibenbremse (1) nach den Ansprüchen 4 bis 6, wobei der mittlere Abschnitt (80) so ausgebildet ist, dass er die gesamte Vorderfläche (S1) des Bremssattels abdeckt, wobei sich die seitlichen Abschnitte (82) seitlich aus dem Bremssattel (2) vorstehend erstrecken und die Arme (32) des Gabelkopfes abdecken,
wobei sich die seitlichen Abschnitte (82) vorzugsweise seitlich aus dem Gabelkopf (3) vorstehend erstrecken und/oder der mittlere Abschnitt (80) und die seitlichen Abschnitte (82) den Gabelkopf (3) vorzugsweise vollständig verdecken.

8. Schwimmsattel-Scheibenbremse (1) nach einem der Ansprüche 1 bis 7, wobei jede seitliche Halterung (52, 53) so ausgebildet ist, dass sie das Abdeckelement (5) mit dem Gabelkopf (3) verbindet, indem sie mechanisch in eine Erhebung (34) eines Arms (32) des Gabelkopfes eingreift,
wobei die seitliche Halterung (52, 53) vorzugsweise eine Form hat, die mit derjenigen der Erhebung (34) des Arms (32) des Gabelkopfs komplementär ist, um in die Erhebung (34) durch Formkomplementarität mechanisch einzugreifen, und/oder wobei die seitliche Halterung (52, 53) vorzugsweise so ausgebildet ist, dass sie das Abdeckelement (5) durch Festklemmen der Erhebung (34) am Gabelkopf (3) anbringt.

9. Schwimmsattel-Scheibenbremse (1) nach dem vorhergehenden Anspruch, wobei eine Bremsbacken-Rückstellfeder (14) an der Erhebung (34) angebracht ist, um die Bremsbacken-Rückstellfeder mit dem Gabelkopf (3) zu verbinden.

10. Schwimmsattel-Scheibenbremse (1) nach Anspruch 2 oder nach einem der Ansprüche 3 bis 9, in Kombination mit Anspruch 2, wobei die untere Halterung (54) so ausgebildet ist, dass sie durch formschlüssige Komplementarität mechanisch in eine im Wesentlichen zylindrische Außenfläche der Stützstange (36) des Gabelkopfes (3) eingreift.

11. Verfahren (100) zum Verbinden eines Abdeckelements (5) mit einem Gabelkopf (3) einer Schwimmsattel-Scheibenbremse (1) nach einem der Ansprüche 1 bis 7, um eine Bremssattelnase (22) der Schwimmsattel-Scheibenbremse (1) abzudecken, indem der Bremssattel und der Gabelkopf (3) mindestens teilweise verdeckt werden, umfassend einen Schritt zur Befestigung (107) des Abdeckelements (5) am Gabelkopf (3),
wobei der Schritt zur Befestigung (107) des Abdeckelements (5) bei der Herstellung der Bremse (1) auf einer Bremsenmontagelinie durchgeführt wird, oder wobei der Befestigungsschritt bei der Montage des Gabelkopfs (3) und des Bremssattels (2) an einem Fahrzeug durchgeführt wird, um ein Rad des Fahrzeugs abzubremsen.

## Claims

1. Floating-caliper disc brake (1) comprising a carrier (3) which is designed to be fixed to a vehicle, a caliper (2) which is mounted so as to be axially movable relative to the carrier (3) between a front rest position and a rear braking position, and a covering element (5) designed to cover the caliper nose (22) by at least partially concealing the caliper (2) and the carrier (3), the covering element (5) comprising a fixing means (50) comprising two lateral fasteners (52,53) which are laterally opposed for fastening the covering element (5) to two laterally opposed arms (32) of the carrier (3), this fixing means (50) being **characterised in that** it further comprises at least one lower fastener (54) which is designed to fasten the covering element (5) to a support bar (36) of the carrier (3), the support bar (36) extending laterally between two laterally opposed arms (32) of the carrier (3), so that the fixing means (50) fixes the covering element (5) to the carrier (3) by immobilizing the covering element (5) relative to the carrier (3).

2. Floating-caliper disc brake (1) according to the preceding claim, wherein at least one of the fasteners (52, 53, 54) of the fixing means (50) comprises two legs (61, 63, 56, 58) for clamping the covering element (5) to the carrier (3), and/or is designed to be mechanically connected to the carrier (3) in a form-fitting manner, in particular by interlocking.

3. Floating-caliper disc brake (1) according to any one of the preceding claims, wherein the covering element (5) comprises a visual marking (51) which is visible to a user on a front surface (S3, S5) of the covering element (5).

4. Floating-caliper disc brake (1) according to any one of the preceding claims, wherein the covering element (5) is designed to laterally cover the entire caliper nose (22) by projecting laterally with respect to the caliper (2), and/or wherein the covering element (5) extends vertically over the entire height of the caliper nose (22),
the covering element (5) preferably being designed to cover an entire front surface (S1) of the caliper which axially delimits the caliper (2) towards the front by concealing the front axial surface of the caliper, and/or the covering element (5) preferably being designed to at least partially conceal at least one of the arms (32) of the carrier by projecting laterally with respect to the caliper nose (22).

5. Floating-caliper disc brake (1) according to any one of the preceding claims, wherein the covering element (5) is a cover plate (5a) or wherein the covering element (5) comprises a cover (5b).

6. Floating-caliper disc brake (1) according to the preceding claim, wherein the covering element (5) comprises a central portion (80) and two lateral portions (82) extending laterally on either side of the central portion (80), the lateral portions (82) being axially offset towards the rear with respect to the central portion (80).

7. Floating-caliper disc brake (1) according to Claims 4 to 6, wherein the central portion (80) is designed to cover the entire front surface (S1) of the caliper, the lateral portions (82) projecting laterally from the caliper (2) covering the arms (32) of the carrier,
the lateral portions (82) preferably projecting laterally from the carrier (3) and/or the central portion (80) and the lateral portions (82) preferably entirely concealing the carrier (3).

8. Floating-caliper disc brake (1) according to any one of claims 1 to 7, wherein each lateral fastener (52, 53) is designed to connect the covering element (5) to the carrier (3) by mechanically engaging a protrusion (34) of an arm (32) of the carrier,
the lateral fastener (52, 53) preferably having a shape complementary to that of the protrusion (34) of the arm (32) of the carrier in order to mechanically engage the protrusion (34) in a form-fitting manner and/or the lateral fastener (52, 53) preferably being designed to fasten the covering element (5) to the carrier (3) by clamping the protrusion (34).

9. Floating-caliper disc brake (1) according to the preceding claim, wherein a pad return spring (14) is fastened to the protrusion (34) to connect the pad return spring to the carrier (3).

10. Floating-caliper disc brake (1) according to Claim 2 or according to any one of Claims 3 to 9, in combination with Claim 2, wherein the lower fastener (54) is designed to mechanically engage a substantially cylindrical outer surface of the support bar (36) of the carrier (3) in a form-fitting manner.

11. Method (100) for connecting a covering element (5) to a carrier (3) of a floating-caliper disc brake (1) according to any one of claims 1 to 9 to cover a caliper nose (22) of the floating-caliper disc brake (1) by at least partially concealing the caliper and the carrier (3), comprising a step of fixing (107) the covering element (5) to the carrier (3),
the step of fixing (107) the covering element (5) being carried out on a brake assembly line during brake (1) manufacture, or the fixing step being carried out during the assembly of the carrier (3) and the caliper (2) on a vehicle for braking a vehicle wheel.
